# EUROPEAN PATENT SPECIFICATION

(11) **EP 2 407 027 B1**
(45) Date of publication and mention of the grant of the patent: **18.02.2015**
(21) Application number: 11005661.1
(22) Date of filing: 11.07.2011
(51) Int. Cl.: A01K 61/00

(54) **Weighted braided rope for the harvest and culture of mussels**
Beschwerte Schnur zum Einfang und zur Züchtung von Muscheln
Corde lestée pour la récolte et la culture mytilicole

(30) Priority: 13.07.2010 ES 201000999
(43) Date of publication of application: 18.01.2012
(73) Proprietor: Gonzalez Corbacho, Manuel, 48700 Ondarroa Vizcaya (ES)
(72) Inventor: Gonzalez Corbacho, Manuel, 48700 Ondarroa Vizcaya (ES)
(74) Representative: Boden, Keith McMurray

(56) References cited:
- FR-A- 1 175 902
- FR-A1- 2 513 851
- FR-A1- 2 549 695
- US-A1- 2007 151 923

## Description

### FIELD OF THE INVENTION

The present invention relates to a weighted mussel rope intended for the harvest and culture of mussels and enabling the invention to be used in suspension or long-line systems by way of weighted ropes.

### PRIOR ART

In this field suspension systems for the harvest and culture of mussels are known. These systems comprise a surface structure made of wood (platform) or of master ropes suspended by means of floats (long-line) anchored to the seabed and from which the ropes for the harvest and culture of mussels are suspended under water in a perpendicular fashion.

Continuous long-line systems consist of a series of plastic buoys, joined by longitudinal ropes (master lines) arranged horizontally in relation to the water surface, to which are attached other vertical ropes positioned in a U-shaped spiral, which are the harvest and culture ropes.

This U-shaped spiral requires, apart from a good weight, highly important face stability so that the ropes do not become coiled around each other, on account of the proximity of the continuous lines, growing mussels in joined loops.

This type of rope requires a weight and to this end lead for the continuous long-line systems is incorporated, and/or weights of a different nature in the rope extremities for simple and platform long-line systems.

With the use of such materials being utilised and given the high toxicity of this heavy metal (lead), a source of contamination is incorporated into the system, which source reaches the mussels owing to the high absorption capacity of this bivalve, which acts as a filter, and which will later be intended for human consumption.

On the other hand account must be taken of the serious damage caused, by the use of weights of different types at the rope extremities, to the flexibility of the production system.

It is also very important to emphasise the danger of detachment of the mass of mussels once it has reached a certain volume.

FR-2549695 describes a rope for farming of molluscs, the rope consisting of a cable having multiple strands and of a fringed belt with filaments which are protruding out of the cable strands. US-20070151923 describes a biomedia apparatus comprising an elongated central core and a plurality of loops positioned along the central core adapted to collect organisms from water.

### DESCRIPTION OF THE INVENTION AND ADVANTAGES

In view of this situation, the object of the invention is, according to claim 1, a weighted braided rope for the harvest and culture of mussels comprising a weighted core formed by a closely woven tubular textile braid of thin rope containing in its interior innocuous rounded mineral grains, said weighted core being surrounded by a resistant tubular textile braid of thick ropes with gaps and inserted between the two is a fringed belt with lateral loops, which reach the outside through the gaps of the resistant tubular textile braid.

Within this general assembly, the resistant tubular textile braid or the closely woven tubular textile braid is preferably formed of a high fluid-absorption hygroscopic material.

The lateral loops of the fringed belt are preferably arranged to be maintained closed or cut open on one or both sides.

The present invention consists preferably of two braids, the weighted core with its closely woven tubular textile braid and the resistant tubular textile braid which are made of hygroscopic material.

The braided and balanced construction of both the weighted core and the resistant tubular textile braid provides neutral torsion to the weighted rope, which means that it has no tendency to turn or twist and thus avoids becoming coiled around adjoining lines, thus keeping the necessary U-shaped spiral. In addition, the use of hygroscopic fibres in the construction of both braids provides the weighted rope with sufficient weight to submerge itself and maintain the required structure.

Preferably the mineral grains of the weighted core are made of an innocuous, natural and insoluble mineral in the form of grains free from edges, and preferably quartz, which avoids the fractures which may occur in the thread that makes up the weighted rope, due to the rolling movement to which the latter is subjected.

Said rounded mineral grains are innocuous both to the larva and the mussel, and to the person who will eventually consume the mussel, avoiding the toxicity provided by the weighted systems used hitherto for this type of weighted ropes through the use of lead and other heavy materials.

It should be emphasised that the lateral loops of the fringed belt project through the gaps of the resistant tubular textile braid, said lateral loops being in contact with the larvae for the harvest or culture of mussels. Said lateral loops provide volume at the time of harvest of the larvae, and grip during the growth process and thus prevent detachments; this, in conjunction with the weighted system, makes it possible to automate the mussel harvesting process.

An alternative weighted braided rope according to claim 7 comprises a weighted core formed by a closely woven tubular textile braid of thin ropes which is designed to contain in its interior braided fibres made of a high-absorption hygroscopic textile with little or no rounded mineral grain.

In this respect, the present invention offers many advantages, among which the non-toxicity of the weight mineral, the maintenance of the U-shaped spiral form in the continuous long-line system and the prevention of detachments of the mass of mussels should be emphasised.

These and other characteristic features of the invention will become apparent from the following detailed description, when taken in conjunction with the appended drawings.

### DRAWINGS AND REFERENCES

In order to better understand the characteristics of the invention, an industrial embodiment is represented in the attached drawings, to be construed as merely illustrative and non-limitative examples.

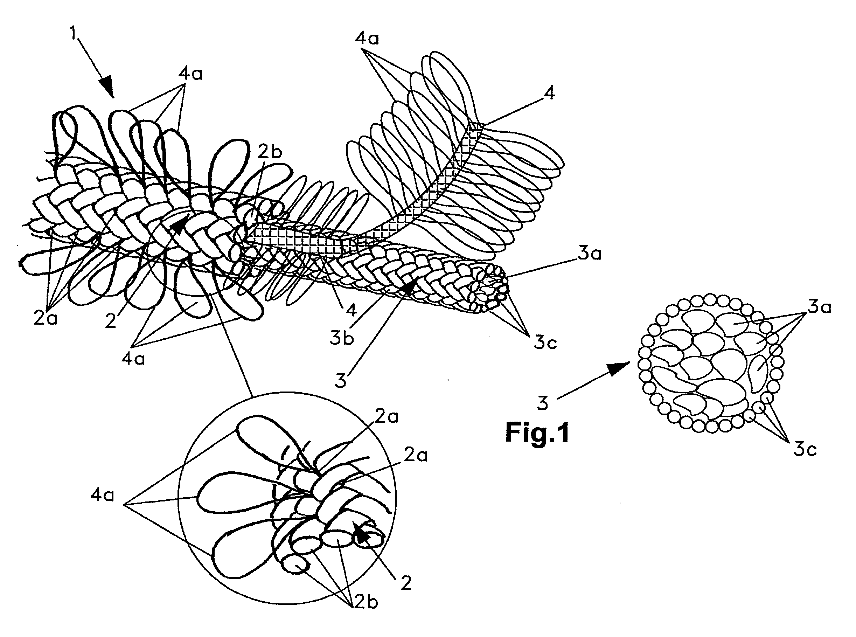

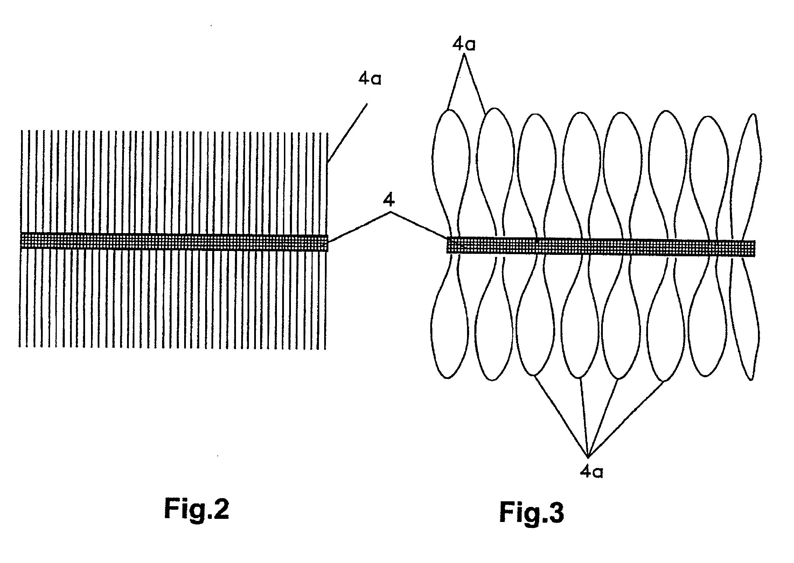

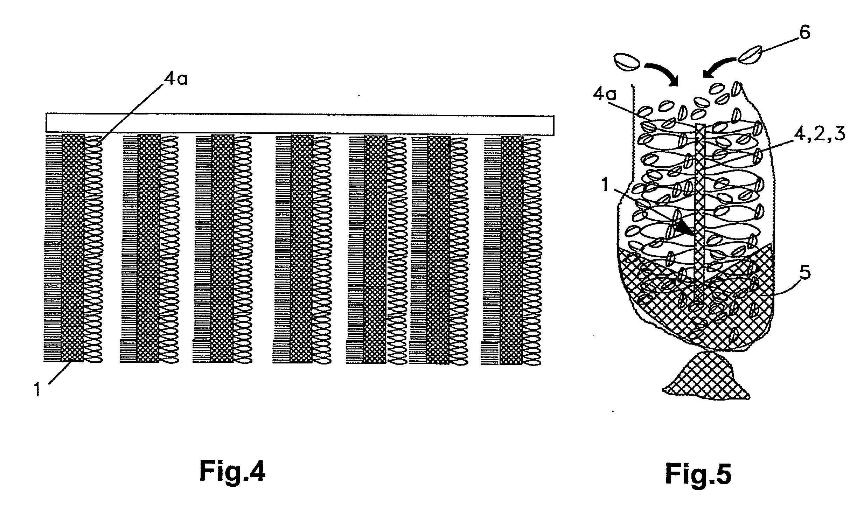

Figure 1 is an exploded, perspective view of the weighted braided rope for the harvest and culture of mussels, which illustrates an enlarged detail view of the weighted rope 1, in which the lateral loops 4a and the resistant tubular textile braid 2 are represented, in order to illustrate the gaps 2a through which the lateral loops 4a appear. An enlarged detail view is also shown of the closely woven tubular textile braid 3b of thin ropes 3c of the braided core 3, surrounding the rounded mineral grains 3a. Figure 2 shows the fringed belt 4 with the lateral loops 4a cut open for the harvest of mussel larvae. Figure 3 illustrates the fringed belt 4 with the lateral loops 4a closed for the culture of mussels. Figure 4 represents one of the possible applications for the harvest of mussel larvae. Figure 5 is a front view of the distended cotton net 5 of mussels 6.

In these figures the following references are indicated: 1. Weighted rope 2. Resistant tubular textile braid 2a. Gaps of resistant tubular textile braid 2 2b. Thick ropes of resistant tubular textile braid 2 3. Weighted core 3a. Rounded mineral grains of weighted rope 3 3b. Closely woven tubular textile braid of weighted rope 3 3c. Thin ropes of closely woven tubular textile braid 3b 4. Fringed belt 4a. Lateral loops of fringed belt 4 5. Net 6. Mussels

### DESCRIPTION OF A PREFERRED EMBODIMENT

In connection with the drawings and references listed above, the attached drawings illustrate a preferred embodiment of the object of the invention, which relates to a weighted braided rope for the harvest and culture of mussels, comprising a weighted core 3 formed of a closely woven tubular textile braid 3b of thin ropes containing in their interior innocuous rounded mineral grains 3a; said weighted core 3 being surrounded by a resistant tubular textile braid 2 of thick ropes with gaps 2a and inserted between the two is the fringed belt 4 with lateral loops 4a, which reach the outside through the gaps 2a of the resistant tubular textile braid 2.

Within this general construction, a preferred embodiment of the invention consists in the fact that the resistant tubular textile braid 2 or closely woven tubular textile braid 3b is made up of a high fluid-absorption hygroscopic material.

The lateral loops 4a of the fringed belt 4 are arranged to be maintained closed or cut open on one or both sides.

As is illustrated in Figure 1, the present invention consists of a resistant tubular textile braid 2 of thick ropes and with gaps 2a, which confine in their interior the weighted core 3 and fringed belt 4.

A preferred embodiment of the invention consists of two braids, the weighted core 3 with its closely woven tubular textile braid 3b and the resistant tubular textile braid 2 which are made of hygroscopic material.

The braided and balanced construction of the weighted core 3 and of the resistant tubular textile braid 2 provides neutral torsion to the weighted rope 1, which means that the latter has no tendency to turn or twist and thus is prevented from becoming coiled around the adjoining lines, thus maintaining the required U-shaped spiral. In addition, the use of hygroscopic fibres in the construction of both braids 2, 3b provides the weighted rope 1 with sufficient weight to remain under water and maintain its necessary structure.

Preferably, the rounded mineral grains 3a of the weighted core 3 are made up of an innocuous, natural and insoluble mineral in the form of grains free from edges, and preferably quartz, which avoids the fractures which may occur in the thread that makes up the weighted rope 1, due to the rolling movement to which the rope is subjected.

Said rounded mineral grains 3a are innocuous both to larvae and mussels and to the person who will eventually consume the mussel, avoiding the toxicity provided by the weighted systems used hitherto for this type of weighted ropes through the use of lead and other heavy materials.

It should be emphasised that the lateral loops 4a of the fringed belt 4 project through the gaps 2a of the resistant tubular textile braid 2, said lateral loops 4a being in contact with the larvae for the harvest and culture of mussels. These lateral loops 4a provide volume at the time of harvest of the larva, and grip during the growth process and thus prevent detachments; this, in conjunction with the weighted system, makes it possible to automate the mussel harvesting process.

In this respect, the present invention offers many advantages, among which the non-toxicity of the weight mineral, the maintenance of the U-shaped spiral form in the continuous long-line system and the prevention of detachments of the mass of mussels should be emphasised.

The braiding of the resistant tubular textile braid 2 enables the weighted rope 1 not to turn around itself, that is to say that the mussels 6 do not grow in loops that have become joined to one another, thus reducing the production and maintenance costs of the suspension or long-line system.

The weighted mussel rope 1 according to the present invention can be used both for the harvesting of larvae and for the culture of mussels 6. To that end, when the larva has reached a sufficient size for its subsequent growth, the weighted mussel rope 1 will be cleaned.

As an alternative according to claim 7, the weighted core 3 formed by a closely woven tubular textile braid 3b of thin ropes 3c contains in its interior braided fibres of a high-absorption hygroscopic textile with little or no rounded mineral grains 3a.

As illustrated in Figure 5, the mussels are forced in, for which purpose use is made of a cotton net 5 which is biodegradable and will disappear within 20 days, and into which the weighted mussel rope 1 and the mussels 6 are inserted.

Said mussels 6 will attach themselves to the lateral loops 4a of the fringed belt 4 which extend from the resistant tubular textile braid 2 for their subsequent growth.

## Claims

1. Weighted braided rope for the harvest and culture of mussels of the kind used for the harvest of larvae and subsequent growth of mussels, **characterised in that** it comprises a weighted core (3) formed by a closely woven tubular textile braid (3b) of thin ropes (3c) containing in its interior innocuous rounded mineral grains (3a); said weighted core (3) being surrounded by a resistant tubular textile braid (2) of thick ropes (2b) with gaps (2a) between the thick ropes (2b) and inserted between the two tubular textile braids (2, 3b) is a fringed belt (4) with lateral loops (4a), which reach the outside through the gaps (2a) of the resistant tubular textile braid (2).

2. Weighted braided rope according to claim 1, **characterised in that** the resistant tubular textile braid (2) is made of a high-fluid absorption hygroscopic material.

3. Weighted braided rope according to claim 1, **characterised in that** the closely woven tubular textile braid (3b) is made of a high-fluid absorption hygroscopic material.

4. Weighted braided rope according to any of claims 1 to 3, **characterised in that** the lateral loops (4a) of the fringed belt (4) are arranged to be maintained closed or cut open on one or both sides.

5. Weighted braided rope according to any of claims 1 to 4, **characterised in that** the rounded mineral grains (3a) are made of an innocuous, natural and insoluble mineral in the form of grains free from edges.

6. Weighted braided rope according to claim 5, wherein the rounded mineral grains (3a) are formed of quartz.

7. Weighted braided rope for the harvest and culture of mussels of the kind used for the harvest of larvae and subsequent growth of mussels, **characterised in that** it comprises a weighted core (3) formed by a closely woven tubular textile braid (3b) of thin ropes (3c) containing in its interior braided fibres of a high- absorption hygroscopic textile with little or no innocuous rounded mineral grains (3a); said weighted core (3) being surrounded by a resistant tubular textile braid (2) of thick ropes (2b) with gaps (2a) between the thick ropes (2b) and inserted between the two tubular textile braids (2, 3b) is a fringed belt (4) with lateral loops (4a), which reach the outside through the gaps (2a) of the resistant tubular textile braid (2).

8. Weighted braided rope according to claim 7, **characterised in that** the resistant tubular textile braid (2) is made of a high-fluid absorption hygroscopic material.

9. Weighted braided rope according to claim 7, **characterised in that** the closely woven tubular textile braid (3b) is made of a high-fluid absorption hygroscopic material.

10. Weighted braided rope according to claim 7, **characterised in that** the lateral loops (4a) of the fringed belt (4) are arranged to be maintained closed or cut open on one or both sides.

## Patentansprüche

1. Gewichtsbelastetes verflochtenes Seil zum Ernten und Züchten von Muscheln der Art, wie es zum Ernten von Larven und nachfolgendem Wachsen von Muscheln verwendet wird, **dadurch gekennzeichnet, dass** es ein mit einem Gewicht versehenen Kern (3) umfasst, der aus einer eng verwobenen, röhrenförmigen Textil-Verflechtung (3b) aus dünnen Seilen (3c) ausgebildet ist, die in deren Inneren unschädlichen abgerundete Mineralkörner (3a) enthält, worin der mit einem Gewicht versehene Kern (3) von einer resistenten röhrenförmigen Textil-Verflechtung (2) aus dicken Seilen (2b) umgeben ist, welche zwischen den dicken Seilen (2b) Lücken (2a) aufweisen und worin zwischen den zwei röhrenförmigen TextilVerflechtungen (2, 3b) ein fransiger Gürtel (4) mit seitlichen Schleifen (4a) inseriert ist, welche das Äußere über die Lücken (2a) der resistenten röhrenförmigen Textil-Verflechtung (2) erreichen.

2. Gewichtsbelastetes verflochtenes Seil nach Anspruch 1, **dadurch gekennzeichnet, dass** die resistente röhrenförmige Textil-Verflechtung (2) aus einem Fluid stark absorbierenden, hygroskopischen Material hergestellt ist.

3. Gewichtsbelastetes verflochtenes Seil nach Anspruch 1, **dadurch gekennzeichnet, dass** die eng verwobene röhrenförmige Textil-Verflechtung (3b) aus einem Fluid stark-absorbierenden, hygroskopischen Material hergestellt ist.

4. Gewichtsbelastetes verflochtenes Seil nach einem der Ansprüche 1 - 3, **dadurch gekennzeichnet, dass** die seitlichen Schleifen (4a) des fransigen Gürtels (4) angeordnet sind, um geschlossen oder auf einer oder beiden Seiten aufgeschnitten gehalten zu werden.

5. Gewichtsbelastetes verflochtenes Seil nach einem der Ansprüche 1 - 4, **dadurch gekennzeichnet, dass** die abgerundeten Mineralkörner (3a) aus einem unschädlichen, natürlichen und unlöslichen Mineral in Form von Körnern ohne Kanten bestehen

6. Gewichtsbelastetes verflochtenes Seil nach Anspruch 1, worin die abgerundeten Mineralkörner (3a) aus Quarz bestehen,

7. Gewichtsbelastetes verflochtenes Seil zum Ernten und Züchten von Muscheln der Art, wie sie zum Ernten von Larven und nachfolgendem Wachsen von Muscheln verwendet wird, **dadurch gekennzeichnet, dass** es ein mit einem Gewicht versehenen Kern (3) umfasst, der aus einer eng verwobenen röhrenförmigen Textil-Verflechtung (3b) aus dünnen Seilen (3c) ausgebildet ist, die in deren Inneren verflochtene Fasern aus einem stark absorbierenden hygroslcopischen Textil mit wenig oder keinen unschädlichen abgerundeten Mineralkörnern (3a) enthält, worin der mit einem Gewicht versehene Kern (3) von einer resistenten röhrenförmigen Textil-Verflechtung (2) aus dicken Seilen (2b) umgeben ist, welche zwischen den dicken Seilen (2b) Löcher (2a) aufweist, und worin zwischen den zwei röhrenförmigen Textilverflechtungen (2, 3b) ein fransiger Gürtel (4) mit seitlichen Schleifen (4) inseriert ist, welche das Äußere über die Lücken (2a) der resistenten röhrenförmigen Textil-Verflechtung (2) erreichen.

8. Gewichtsbelastetes verflochtenes Seil nach Anspruch 7, **dadurch gekennzeichnet, dass** die resistente röhrenförmige Textil-Verflechtung (2) aus einem Fluid hochabsorbierenden, hygroskopischen Material hergestellt ist.

9. Gewichtsbelastetes verflochtenes Seil nach Anspruch 7, **dadurch gekennzeichnet, dass** die eng verwobene röhrenförmige Textil-Verflechtung (3b) aus einem Fluid stark-absorbierenden, hygroskopischen Material hergestellt ist.

10. Gewichtsbelastetes verflochtenes Seil nach Anspruch 7, **dadurch gekennzeichnet, dass** die seitlichen Schleifen (4a) des fransigen Gürtels (4) angeordnet sind, um geschlossen oder auf einer oder beiden Seiten aufgeschnitten gehalten zu werden.

## Revendications

1. Corde tressée lestée pour la récolte et la culture mytilicole du type utilisé pour la récolte de larves et la croissance ultérieure de champignons, **caractérisée en ce qu'**elle comprend une âme lestée (3) constituée d'une tresse textile tubulaire étroitement tissée (3b) de cordes minces (3c) contenant dans son intérieur des grains minéraux arrondis inoffensifs (3a) ; ladite âme lestée (3) étant entourée d'une tresse textile tubulaire résistante (2) de cordes épaisses (2b) avec des espacements (2a) entre les cordes épaisses (2b) et insérée entre les deux tresses textiles tubulaires (2, 3b) se trouve une ceinture bordée (4) avec des boucles latérales (4a), qui atteignent l'extérieur à travers les espacements (2a) de la tresse textile tubulaire résistante (2).

2. Corde tressée lestée selon la revendication 1, **caractérisée en ce que** la tresse textile tubulaire résistante (2) est constituée d'un matériau hygroscopique à grande absorption de fluide.

3. Corde tressée lestée selon la revendication 1, **caractérisée en ce que** la tresse textile tubulaire étroitement tissée (3b) est constituée d'un matériau hygroscopique à grande absorption de fluide.

4. Corde tressée lestée selon l'une quelconque des revendications 1 à 3, **caractérisée en ce que** les boucles latérales (4a) de la ceinture bordée (4) sont agencées pour être maintenues fermées ou coupées ouvertes sur un côté ou sur les deux côtés.

5. Corde tressée lestée selon l'une quelconque des revendications 1 à 4, **caractérisée en ce que** les grains minéraux arrondis (3a) sont constitués d'un minéral inoffensif, naturel et insoluble sous la forme de grains dépourvus de bord.

6. Corde tressée lestée selon la revendication 5, dans laquelle les grains minéraux arrondis (3a) sont constitués de quartz.

7. Corde tressée lestée pour la récolte et la culture mytilicole du type utilisé pour la récolte de larves et la croissance ultérieure de champignons, **caractérisée en ce qu'**elle comprend une âme lestée (3) constituée d'une tresse textile tubulaire étroitement tissée (3b) de cordes minces (3c) contenant dans son intérieur des fibres tressées d'un textile hygroscopique à grande absorption avec peu ou pas de grains minéraux arrondis inoffensifs (3a) ; ladite âme lestée (3) étant entourée d'une tresse textile tubulaire résistante (2) de cordes épaisses (2b) avec des espacements (2a) entre les cordes épaisses (2b) et insérée entre les deux tresses textiles tubulaires (2, 3b) se trouve une ceinture bordée (4) avec des boucles latérales (4a), qui atteignent l'extérieur à travers les espacements (2a) de la tresse textile tubulaire résistante (2).

8. Corde tressée lestée selon la revendication 7, **caractérisée en ce que** la tresse textile tubulaire résistante (2) est constituée d'un matériau hygroscopique à grande absorption de fluide.

9. Corde tressée lestée selon la revendication 7, **caractérisée en ce que** la tresse textile tubulaire étroitement tissée (3b) est constituée d'un matériau hygroscopique à grande absorption de fluide.

10. Corde tressée lestée selon la revendication 7, **caractérisée en ce que** les boucles latérales (4a) de la ceinture bordée (4) sont agencées pour être maintenues fermées ou coupées ouvertes sur un côté ou sur les deux côtés.
